Europäisches Patentamt

European Patent Office

Office européen des brevets

(11) Veröffentlichungsnummer: **0 274 720**
**A2**

(12) **EUROPÄISCHE PATENTANMELDUNG**

(21) Anmeldenummer: 87118895.9

(22) Anmeldetag: 19.12.87

(51) Int. Cl.⁴: **B29C 67/22** , //B29K25:00

(30) Priorität: 09.01.87 DE 3700479

(43) Veröffentlichungstag der Anmeldung:
20.07.88 Patentblatt 88/29

(84) Benannte Vertragsstaaten:
AT FR GB IT

(71) Anmelder: **Münchow und Hühne**
**Maschinenbaugesellschaft mbH**
**Am Weissen Stein 9**
**D-4100 Duisburg 18(DE)**

(72) Erfinder: **Bröhl, Franz-Josef**
**Steinstrasse 3**
**D-4170 Geldern-Pont(DE)**
Erfinder: **Finck, Lothar**
**Am Gansacker 18**
**D-4100 Duisburg 25(DE)**

(74) Vertreter: **Masch, Karl Gerhard et al**
**Patentanwälte Andrejewski, Honke & Partner**
**Theaterplatz 3 Postfach 10 02 54**
**D-4300 Essen 1(DE)**

(54) Form zum Herstellen quaderförmiger Schaumstoffblöcke.

(57) Eine Form zum Herstellen quaderförmiger Schaumstoffblöcke aus mit Hilfe von Wasserdampf bläh-und versinterbaren Kunststoffteilchen besteht aus einer quaderförmigen Innenform (1) mit Behandlungsöffnungen aufweisenden, auseinanderbewegbaren Formwandungen (2, 3) und aus einer die Innenform (1) umgebenden, druckdicht verschließbaren Außenform (4) mit einem Wasserdampfeinlaß (5) und einem Entlüftungs-und Vakuumpumpenanschlußstutzen (6). Eine solche Form weist einen konstruktiv besonders einfach zu realisierenden Aufbau auf, wenn die Außenform (4) aus einem rohrförmigen Druckbehälter (7) mit als Druckdichtungstür (9) ausgebildeter Vorderstirnformwand (10) und mit in der Rückstirnformwand (11) senkrecht zu dieser bis in die Innenform (1) einschiebbar gelagertem Blockausstoßer (12) besteht.

Fig. 1

Xerox Copy Centre

## Form zum Herstellen quaderförmiger Schaumstoffblöcke

Die Erfindung betrifft eine Form zum Herstellen quaderförmiger Schaumstoffblöcke aus mit Hilfe von Wasserdampf bläh- und versinterbaren Kunststoffteilchen, insbesondere vorgeschäumten Polystyrolteilchen, bestehend aus einer quaderförmigen Innenform mit Behandlungsöffnungen aufweisenden, auseinanderbewegbaren Formwandungen und aus einer, die Innenform umgebenden, druckdicht verschließbaren Außenform mit einem Wasserdampfeinlaß und einem Entlüftungs- und Vakuumpumpenanschlußstutzen.

Bei aus der Praxis bekannten Formen dieser Art sind die Innenform und die Außenform durch Ausführung der Einzelwandungen als Doppelwandungen derart ineinander integriert, daß Innenform and Außenform praktisch keine funktionell voneinander unabhängigen Baugruppen bilden. Der genannte Aufbau hat eine verhältnismäßig hohen konstruktiven Aufwand zur Folge, weil für Druckdichtheit die Einzelwandungen ausreichende Gestaltfestigkeit aufweisen müssen und zwischen den Einzelwandungen aufwendige, einem Verschließ unterworfene Dichtungen erforderlich sind.

Der Erfindung liegt die Aufgabe zugrunde, eine Form der eingangs genannten Art so weiter zu entwickeln, daß die Druckdichtheit einerseits, die exakte Quaderform der herzustellenden Schaumstoffblöcke andererseits mit wesentlich einfacheren technischen Mitteln erreicht wird.

Die erfindungsgemäße Lösung dieser Aufgabe besteht darin, daß die Außenform aus einem rohrförmigen Druckbehälter mit als Druckdichtungstür ausgebildeter Vorderstirnformwand und mit in der Rückstirnformwand senkrecht zu dieser bis in die Innenform einschiebbar gelagertem Blockausstoßer besteht.

Die Erfindung geht hierbei von der Erkenntnis aus, daß das gewünschte Ergebnis mit wesentlich einfacheren technischen Mitteln erreicht werden kann, wenn die Funktion der Innenform, nämlich den herzustellenden Blöcken die genaue Quaderform zu geben, und die Funktion der Außenform, nämlich Druckdichtheit zu garantieren, in funktionell separaten Baugruppen verwirklicht wird. Aus diesem Grund schlägt die Erfindung einen autoklavähnlichen Druckbehälter vor, der die Außenform bildet und in dem die zum Entfernen der Blöcke gleichsam expandierbare Innenform angeordnet ist. Das Entfernen der hergestellten Blöcke erfolgt durch die Druckdichtungstür, wobei der am gegenüberliegenden Ende vorgesehene Blockausstoßer behilflich ist, wenn sich der jeweils auszustoßende Block nicht so ohne weiteres von den Innenformwandungen löst.

Für die weitere Ausgestaltung der erfindungsgemäßen Form bestehen mehrere Möglichkeiten. So ist nach einer bevorzugten Ausführungsform die Druckdichttür mit einem hydraulisch oder pneumatisch betätigbaren Türverschluß versehen. Der Blockausstoßer ist zweckmäßigerweise als Zylinderkolbenanordnung ausgeführt; er kann dann in Ruhestellung mit seinem Kolben gleichsam Teil der entsprechenden Innenformstirnwand sein. Das Füllen der Innenform mit den zu blähenden und versinternden Kunststoffteilchen erfolgt zweckmäßigerweise ebenfalls über die Rückstirnformwand. Am einfachsten läßt sich das verwirklichen, indem die Zylinderkolbenanordnung zugleich als Zuführeinrichtung für die Kunststoffteilchen ausgebildet ist und dazu mit einer Zylinderabzweigung versehen ist. Jedenfalls empfiehlt sich für eine besonders wirksame Lösung der hergestellten Blöcke von der Innenform die exzentrische Anordnung des Blockausstoßes in der Rückstirnformwand. Hinsichtlich des Aufbaus der Innenform hat sich eine Ausführungsform bewährt, bei der die Innenformseitenwandungen mit ihren Oberenden an das jeweils zugeordnete Außenende der Innenformdeckenwandung angelenkt und mit ihren Unterenden auf jeweils einem Exzenterantrieb gelagert sind, mit deren Hilfe sie auseinander und nach oben drückbar sind. Die jeweiligen Stirnseiten der Innenform können wie bisher mit den entsprechenden Wandungen der Außenform verbunden sein, indem diese als Doppelwandung bzw. als Doppeltür ausgebildet sind. Damit der über den Wasserdampfeinlaß in den Druckbehälter eingeführte Wasserdampf nicht an der Innenform vorbei zum Entlüftungs- und Vakuumpumpenanschlußstutzen gelangt, mündet der Wasserdampfeinlaß zweckmäßigerweise in den zwischen der Außerform und der Innenform gebildeten Hohlräumen, während die Innenformdeckenwandung über zwei längs durchlaufende, U-förmige Gummi- oder Kunststoffelemente an dem Druckbehälter aufgehängt ist, zwischen denen der Entlüftungs- und Vakuumpumpenanschlußstutzen mündet; damit kann der Wasserdampf nur über die Behandlungsöffnungen in den Innenformwandungen zum Entlüftungs- und Vakuumpumpenanschlußstutzen gelangen. Bei den bekannten Formen der eingangs genannten Art wird oftmals mit einem der Vakuumpumpe vorgeschalteten, Wassersprühdüsen aufweisenden Kondensator gearbeitet; dieser im Stand der Technik gleichsam externe Kondensator kann augrund der bei der erfindungsgemäßen Form vorhandenen Hohlräume ohne weiteres in eben diese Hohlräume verlegt werden. Im einzelnen empfiehlt sich hierzu eine Anordnung, bei der die Wassersprühdüsen in neben den Innenformseitenwandungen verlaufenden Längsleitungen vorgesehen sind, unter denen Sammelrinnen angeordnet sind.

Im folgenden wird die Erfindung anhand einer ein Ausführungsbeispiel darstellenden Zeichnung näher erläutert. Es zeigen in schematischer Darstellung

Fig. 1 einen Längsschnitt durch eine Form,

Fig. 2 eine Vorderansicht des Gegenstandes der Fig. 1 und

Fig. 3 einen Schnitt A-A durch den Gegenstand der Fig. 1.

Die in den Figuren dargestellte Form dient zum Herstellen quaderförmiger Schaumstoffblöcke, aus mit Hilfe von Wasserdampf bläh-und versinterbaren Kunststoffteilchen, insbesondere vorgeschäumten Polystyrolteilchen. In ihrem grundsätzlichen Aufbau besteht die Form aus einer quaderförmigen Innenform 1 mit Behandlungsöffnungen (nicht dargestellt) aufweisenden, auseinanderbewegbaren Formwandungen 2, 3 und aus einer die Innenform 1 umgebenden, druckdicht verschließbaren Außenform 4 mit einem Wasserdampfeinlaß 5 und einem Entlüftungs-und Vakuumpumpenanschlußstutzen 6.

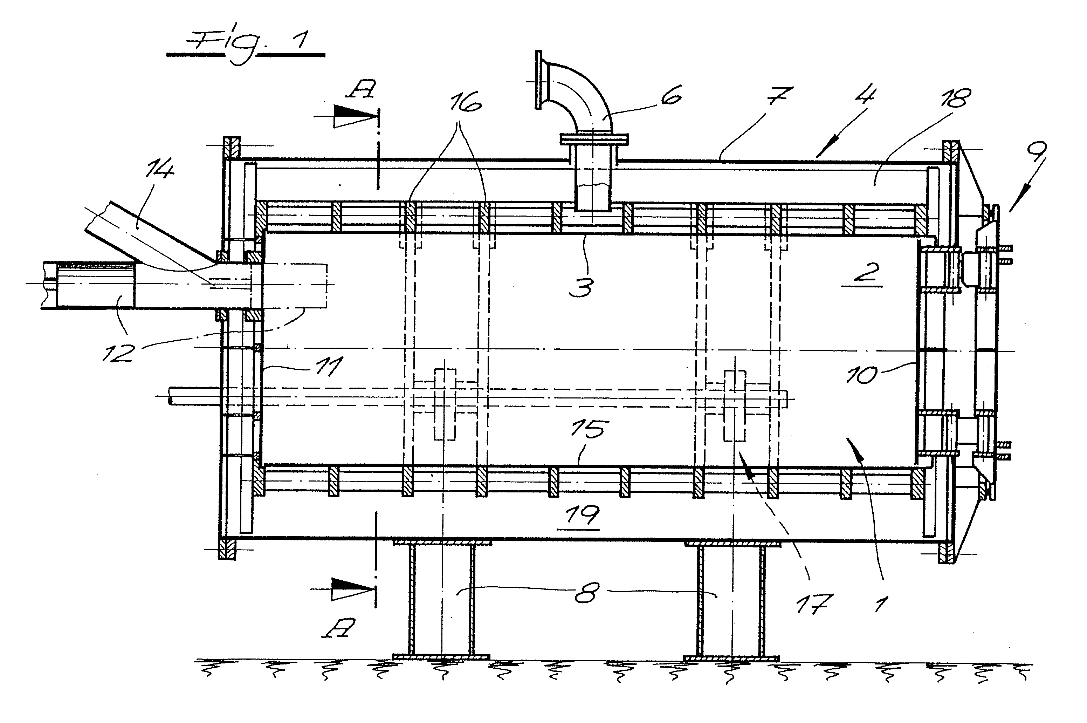

Wie man insbesondere aus Fig. 1 erkennt, besteht die Außenform 4 aus einem rohrförmigen Druckbehälter 7 auf Stützen 8. Die Vorderstirnwand ist als Druckdichtungstür 9 ausgebildet. Die Druckdichtungstür 9 trägt zugleich auch die Vorderstirnwandung 10 der Innenform 1. In der entsprechend gedoppelten Rückstirnformwand 11 ist ein Blockausstoßer 12 gelagert, der senkrecht zu dieser Rückstirnformwand 11 bis in die Innenform 1 einschiebbar ist.

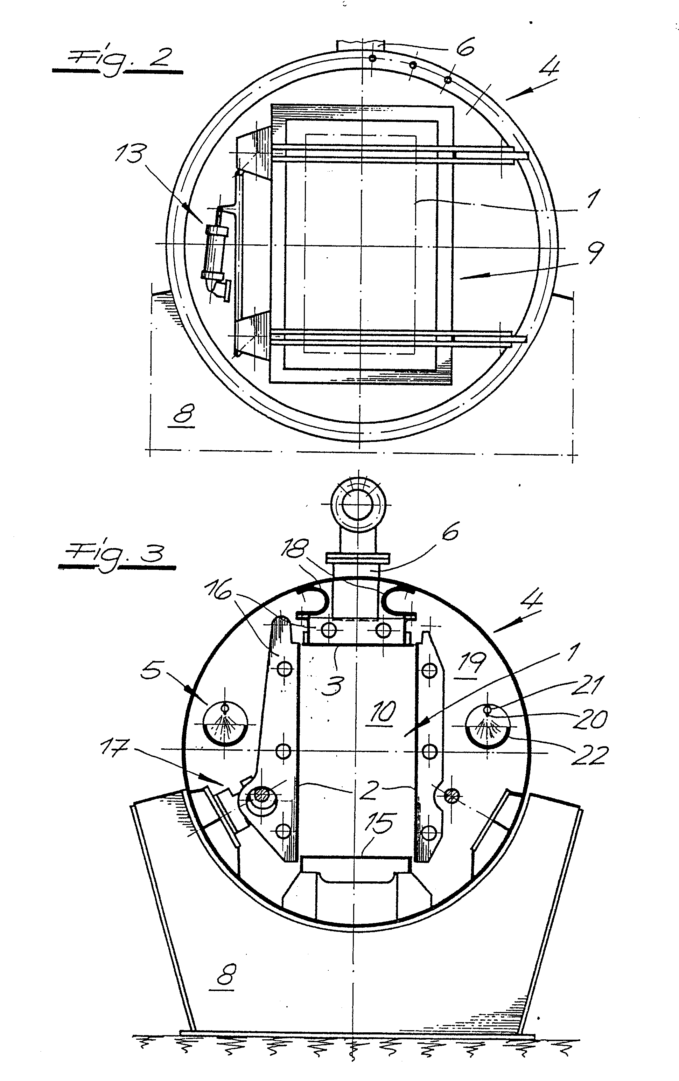

Im einzelnen ist die Druckdichtungstür 9 mit einem hydraulisch oder pneumatisch betätigbaren Türverschluß 13 versehen (vgl. Fig. 2). Auf der anderen Seite ist der Blockausstoßer 12 als Zylinderkolbenanordnung ausgeführt (vgl. Fig. 1). Diese Zylinderkolbenanordnung ist zugleich als Zuführeinrichtung für die Kunststoffteilchen ausgebildet und dazu mit einer Zylinderabzweigung 14 versehen. Jedenfalls ist der Blockausstoßer 12 exzentrisch in der Rückstirnformwand 11 angeordnet, um das Lösen eines auszustoßenden Blockes von der Innenform 1 zu erleichtern.

Wie man aus Fig. 3 erkennt, ist der Innenformboden 15 fest im Druckbehälter 7 angeordnet, während eine Innenformseitenwandung 2 und die Innenformdeckenwandung 3 beweglich und mit Aussteifungen 16 versehen sind.

Im einzelnen sind die Innenformseitenwandungen 2 mit ihren Oberenden an das jeweils zugeordnete Außenende der Innenformdeckenwandung 3 angelenkt und mit ihren Unterenden auf jeweils einem Exzenterantrieb 17 gelagert, mit deren Hilfe sie auseinander und nach oben drückbar sind. Die Exzenterantriebe 17 sind durch die Rückstirnformwand 11 nach außen geführt (vgl. Fig. 1). Die Innenformdeckenwandung 3 ist über zwei längs durchlaufende, U-förmige Gummi-oder Kunststoffelemente 18 im Kopfbereich des Druckbehälters 7 aufgehängt. Zwischen diesen Gummi-oder Kunststoffelementen 18 mündet der Entlüftungs-und Vakuumpumpenanschlußstutzen 6; diese Gummi-oder Kunststoffelemente 18 funktionieren also als Dampfkammersperre, weil sie dafür sorgen, daß der in die zwischen der Innenform 1 und dem Druckbehälter 7 gebildeten Hohlräume 19 eingeleitete Wasserdampf nur über die Innenform 1 abgeführt werden kann.

Im übrigen erkennt man aus den Fig. 1 und 3, daß die Form mit einem der Vakuumpumpe (nicht dargestellt) vorgeschalteten, Wassersprühdüsen 20 aufweisenden Kondensator versehen ist. Dieser Kondensator ist in den bereits erwähnten Hohlräumen 19 angeordnet. Dazu sind die Wassersprühdüsen 20 in neben den Innenformseitenwandungen 2 verlaufenden Längsleitungen 21 vorgesehen, unter denen Sammelrinnen 22 angeordnet sind, in die die Wassersprühdüsen 20 hineinsprühen.

## Ansprüche

1. Form zum Herstellen quaderförmiger Schaumstoffblöcke aus mit Hilfe von Wasserdampf bläh-und versinterbaren Kunststoffteilchen, insbesondere vorgeschäumten Polystyrolteilchen, bestehend aus einer quaderförmigen Innenform mit Behandlungsöffnungen aufweisenden, auseinanderbewegbaren Formwandungen und aus einer die Innenform umgebenden, druckdicht verschließbaren Außenform mit einem Wasserdampfeinlaß und einem Entlüftungs-und Vakuumpumpenanschlußstutzen, **dadurch gekennzeichnet**, daß die Außenform (4) aus einem rohrförmigen Druckbehälter (7) mit als Druckdichtungstür (9) ausgebildeter Vorderstirnformwand (10) und mit in der Rückstirnformwand (11) senkrecht zu dieser bis in die Innenform (1) einschiebbar gelagertem Blockausstoßer (12) besteht.

2. Form nach Anspruch 1, dadurch gekennzeichnet, daß die Druckdichtungstür (9) mit einem hydraulisch oder pneumatisch betätigbaren Türverschluß (13) versehen ist.

3. Form nach Anspruch 1 oder 2, dadurch gekennzeichnet, daß der Blockausstoßer (12) als Zylinderkolbenanordnung ausgeführt ist.

4. Form nach Anspruch 3, dadurch gekennzeichnet, daß die Zylinderkolbenanordnung zugleich als Zuführeinrichtung für die Kunststoffteilchen ausgebildet ist und dazu mit einer Zylinderabzweigung (14) versehen ist.

5. Form nach einem der Ansprüche 1 bis 4, dadurch gekennzeichnet, daß der Blockausstoßer (12) exzentrisch in der Rückstirnwand (11) angeordnet ist.

6. Form nach einem der Ansprüche 1 bis 5, dadurch gekennzeichnet, daß die Innenformseitenwandungen (2) mit ihren Oberenden an das jeweils zugeordnete Außenende der Innenformdeckenwandung (3) angelenkt und mit ihren Unterenden auf jeweils einem Exzenterantrieb (17) gelagert sind, mit deren Hilfe sie auseinander und nach oben drückbar sind.

7. Form nach Anspruch 6, dadurch gekennzeichnet, daß die Innenformdeckenwandung (3) über zwei längs durchlaufende, U-förmige Gummi- oder Kunststoffelemente (18) am Druckbehälter (7) aufgehängt ist, zwischen denen der Entlüftungs- und Vakuumpumpenanschlußstutzen (6) mündet.

8. Form nach einem der Ansprüche 1 bis 7 in der Ausführungsform mit einem der Vakuumpumpe vorgeschalteten, Wassersprühdüsen aufweisenden Kondensator, dadurch gekennzeichnet, daß der Kondensator in den zwischen der Innenform (1) und dem Druckbehälter (7) gebildeten Hohlräumen (19) angeordnet ist.

9. Form nach Anspruch 8, dadurch gekennzeichnet, daß die Wassersprühdüsen (20) in neben den Innenformseitenwandungen (2) verlaufenden Längsleitungen (21) vorgesehen sind, unter denen Sammelrinnen (22) angeordnet sind.

_Fig. 1_

0 274 720

_Fig. 2_

_Fig. 3_

65806